# EUROPEAN PATENT APPLICATION

(11) **EP 2 671 858 A1**
(43) Date of publication of application: **11.12.2013**
(21) Application number: 12171284.8
(22) Date of filing: 08.06.2012
(51) Int. Cl.: C07B 57/00

(54) **Process for chiral resolution of etiracetam**

(71) Applicant: Université Catholique de Louvain, 1348 Louvain-La-Neuve (BE)
(72) Inventor: Leyssens, Tom, 1210 Saint-Josse-ten-Node (BE); Springuel, Géraldine, 1200 Woluwe-Saint-Lambert (BE)
(74) Representative: Pecher, Nicolas

(57) **Abstract**

The present invention relates to a process the separation of enantiomers or diastereomers of a chiral compound from a mixture of two such enantiomers or diastereomers, said process comprising the steps of:
(a) Forming a solution comprising:
● a first enantiomers or diastereomers (R) of said chiral compound
● a second enantiomers or diastereomers (S) of said chiral compound, at a given content ratio (R/S) between the first and second enantiomers or diastereomers,
● an optically active coformer (C), and
● a solvent (sv),
wherein at a given crystallization temperature, Tc, the ternary phase diagram between the first enantiomer or diastereomer (R), the optically active coformer (C) and the solvent (Sv) comprises at least two eutectic points defining a zone of co-crystallization (CR) between the first enantiomer or diastereomer and the optically active coformer,

(b) bringing and maintaining the solution to said crystallization temperature such as to form co-crystals (CR) of the coformer with the first enantiomer or diastereomer, without forming any salt,
(c) separating the co-crystals from the rest of the solution;
**characterized in that,**
for said content ratio (R/S) between the first and second enantiomers or diastereomers, the concentrations of the coformer and of the solvent are selected such that at least part of the first enantiomer co-crystallizes with the coformer and such that 100% of the second enantiomer or diastereomer (S) remains in solution over step (b) of the process.

## Description

### TECHNICAL FIELD

The present invention relates generally to the field of chiral resolution processes and in particular to a process for chiral resolution of two enantiomers or diastereomers.

### DESCRIPTION OF RELATED ART

Chiral resolution is common practice in the biomedical and pharmaceutical industry given the large number of chiral drug candidates. In most cases only one optically active form of the drug shows biological activity whilst the other has either no physiological activity or shows undesirable or toxic effects.

Currently, two common industrially applied techniques for the separation of two enantiomers are diastereomeric salt formation and chiral chromatography. The first is a relatively cheaper process but can only be successfully applied when the compound of interest can easily be converted into a salt. In this case, addition of an optically active resolving agent, leads to the formation of two distinct diastereomeric salts, which show dissimilar physical properties, allowing a chiral resolution through salt crystallization.

US 6,570,036 discloses the chiral resolution of a racemic mixture of chiral amine or carboxylic acid in presence of an optically active carboxylic acid or amine respectively. The crystallization of only one optically active salt is achieved in microemulsion. The salt is formed since hydrogen transfer occurs between the carboxylic acid and the amine.

Nemak et al. (Tetrehedron, 52, 5, 1637-1642) discloses partial resolution of N-alkyl-pipecolic acid-anilides by tartaric acid. For almost all compounds tested, both enantiomers partly precipitate during the resolution process. The resolution is performed by precipitation of a salt or a complex under effective stirring.

Thorey et al. (Thermochimica acta, 2010, 497, 129-136) discloses an enantiospecific extraction process by supercritical CO₂. Such process cannot be easily implemented for a large amount of compounds due to a possible instability of the compounds under temperature and pressure conditions needed for supercritical extraction.

When the compound of interest does not form a salt, the diastereomeric salt formation technique is ineffective and, to date, only derivatization of the compound before chiral resolution via salt crystallization or resolution through chiral chromatography can be applied to resolve such compounds. CN102093280 discloses the preparation of levetiracetam, i.e. (2S)-2-(2-oxopyrrolidin-1-yl)butanamide. The optically active S-enantiomer is obtained by introducing an amino functional group and crystallizing the resulting compound, (R,S)-N-[(1,1-diethylin)methyl]-2-(2-oxopyrroliddine-1-yl)butyrylamide, in presence of L-(+)-tartaric acid. Only one isomer is obtained, namely (S)-N-[(1,1-diethylin)methyl]-2-(2-oxopyrroliddine-1-yl)butyrylamide L-tartrate. The latter compound is a salt since the hydrogen of the carboxylic acid moiety of tartaric acid is transferred to the nitrogen atom of the N-diethylinmethyl moiety. The salt, thus obtained, is subjected to deprotection reaction to afford levetiracetam.

Chiral chromatography is, however, not environmental-friendly due to the large amount of solvent used. Even if industrially applied for the production of certain drugs, it is relatively expensive. Moreover, the stationary phase has to be often changed due to severe degradation. The choice of the stationary phase is strongly dependent on the compound to be resolved.

The present invention aims at providing a process that addresses at least part of the above-discussed drawbacks of the prior art.

It is an object of the present invention to provide a new process which is easy to handle for a large variety of chiral compounds. In particular, it is an object of the present invention to provide a process for chiral resolution of compounds that do not or do not easily form salts.

Another object of the present invention is to provide a process being economically and environmentally more interesting compared with chiral chromatography.

### SUMMARY OF THE INVENTION

The present invention addresses drawbacks of the prior art by providing a co-crystallization process for isolating an optically active isomer of a chiral compound. In particular, said process may be suitable when said chiral compound does not easily form salt rendering the classical crystallization process via salt formation unsuitable.

In a first aspect, the present invention relates to a process for the separation of stereoisomers of a chiral compound, said process comprising the steps of:
(a) Forming a solution containing
   ● A first selection (p) of one or more of the stereoisomers (pi)
   ● A second selection (σ) of one or more of the stereoisomers (σi) at a given ratio (ρ/σ) between the first (p) and second selections (σ) of one or more stereoisomers
   ● an optically active coformer (C), and
   ● a solvent (sv),
   wherein at a given crystallization temperature, Tc, the ternary phase diagram between each of the stereoisomer (pi) of the first selection (p), the optically active coformer (C) and the solvent (sv) comprises at least two eutectic points defining a zone of co-crystallization (Cpi) between each stereoisomer (pi) of the first selection (p) and the optically active coformer,
(b) bringing and maintaining the solution to said crystallization temperature such as to form co-crystals (Cpi) of the coformer with each stereoisomer (pi) of the first selection (p), without forming any salt,
(c) separating the co-crystals from the rest of the solution;
   characterized in that, for said content ratio (ρ/σ) between the first selection (p) and the second selection (σ), the concentrations of the coformer and of the solvent are selected such that at least part of each of the stereoisomers (pi) of the first selection (p) co-crystallizes with the coformer and such that 100% of each of the stereoisomers (σi) of the second selection (σ) remains in solution over step (b) of the process.

In particular, a process is used for the separation of enantiomers or diastereomers of a chiral compound from a mixture of two such enantiomers or diastereomers. Said process comprises the steps of:
(a) Forming a solution containing:
   ● a first enantiomer or diastereomer (R) of said chiral compound
   ● a second enantiomer or diastereomer (S) of said chiral compound, at a given content ratio (R/S) between the first and second enantiomers or diastereomers,
   ● an optically active coformer (C), and
   ● a solvent (sv),
      wherein at a given crystallization temperature, Tc, the ternary phase diagram between the first enantiomer or diastereomer (R), the optically active coformer (C) and the solvent (Sv) comprises at least two eutectic points defining a zone of co-crystallization (CR) between the first enantiomer or diastereomer and the optically active coformer,
(b) bringing and maintaining the solution to said crystallization temperature such as to form co-crystals (CR) of the coformer with the first enantiomer or diastereomer, without forming any salt,
(c) separating the co-crystals from the rest of the solution;
   characterized in that, for said content ratio (R/S) between the first and second enantiomers or diastereomers, the concentrations of the coformer and of the solvent are selected such that at least part of the first enantiomer co-crystallizes with the coformer and such that 100% of the second enantiomer or diastereomer (S) remains in solution over step (b) of the process.

In a third aspect, co-crystals comprising an optically active isomer of a chiral compound are obtained. In particular, co-crystals comprising an optically active isomer of a chiral compound may be obtained by the present process.

### BRIEF DESCRIPTION OF THE DRAWINGS

Fig.1 represents a schematic quaternary phase diagram between a solvent (Sv), an optically active coformer (C), and two enantiomers (R) and (S) of a chiral compound, according to an embodiment of the present invention.

Fig.2 represents an enlarged view of a slice, A, of the quaternary phase diagram of Figure 1 at a given solvent concentration, according to an embodiment of the present invention.

Fig. 3a-c represent schematic ternary phase diagrams extracted from the quaternary phase diagram of Figure 1 at three given solvent concentrations, according to an embodiment of the present invention.

Fig. 4 represents a schematic ternary phase diagram illustrating how the concentrations in the three components thereof can be determined at a given point.

Fig. 5 represents schematic ternary phase diagram A' extracted from a quaternary phase diagram at a given solvent concentration, the dashed line representing a ratio R/S of 1 (= racemic mixture).

Fig. 6a-d represents binary melting phase diagrams between levetiracetam and S-mandelic acid, R-mandelic-acid, D-tartaric acid and L-tartaric acid, respectively.

Fig. 7 represents a schematic ternary phase diagram between S-mandelic acid (S-2), (2S)-2-(2-oxopyrrolidin-1-yl)butanamide and (2R)-2-(2-oxopyrrolidin-1-yl)butanamide, at -10°C and at 89 mol% of acetonitrile of total solution.

### DETAILED DESCRIPTION OF THE INVENTION

Before the present process and products used in the invention are described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any methods and materials similar or equivalent to those described herein may be used in the practice or testing of the present invention, the preferred methods and materials are now described.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Whenever the term "substituted" is used in the present invention, it is meant to indicate that one or more hydrogen on the atom indicated in the expression using "substituted" is replaced with a selection from the indicated group, provided that the indication atom's normal valence is not exceeded, and that the substitution results in a chemically stable compound, i.e. a compound that is sufficiently robust to survive isolation to a useful degree of purity from a reaction mixture. Unless otherwise mentioned, when the term "substituted" is used, it refers to one or more substituents selected from the group consisting of halogen, hydroxyl, nitro, cyano, thiocyanate, cyanamide, amido, thioamido, sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, and hydroxamic acid.

The term "co-crystallization" as used herein refers to the process to form co-crystals. The term "co-crystals" as used herein refers to a multicomponent crystal containing a ratio of at least two components that are preferably, solid at room temperature and ambient pressure. The co-crystal is formed without forming any salt, i.e. no hydrogen transfer is exhibited between functional groups of the first enantiomer of said chiral compound and said optically active coformer. The difference between a crystalline salt and a co-crystal lies merely in the transfer of a proton. The transfer of protons from one component to another in a crystal is dependent on the environment. For this reason, crystalline salts and co-crystals may be thought of as two ends of a proton transfer spectrum, where the salt has completed the proton transfer at one end and an absence of proton transfer exists for co-crystals at the other end.

The term "chiral compound" as used herein refers to a compound having one or more asymmetric atom, preferably carbon atom. The chiral may be neutral and unionized at solid state at room temperature. The term "coformer" as used herein refers to a chiral molecule able to interact with said chiral compound without reacting with it. A coformer is not able to form a salt with said chiral compound. Hence, the coformer may be selected such that it does not react with said chiral compound. A reaction implies a modification of the chemical structure of the chiral compound. For example, the reaction may be the dissociation of one or more atom of the chiral compound. The coformer can be neutral as well as ionized encompassing salts or zwitterionic forms of the molecule.

The term "unionized" as used herein refers to a molecule which is neither positively or negatively charged.

The term "optically active" as used herein with respect to the term "compound" or "coformer" refers to an isomer of the compound or coformer able to rotate the plane of polarization of a beam of polarized light either in a levorotatory or in a dextrorotatory direction.

The term "racemic mixture" as used herein refers to a mixture in equal amount of both enantiomers of a chiral molecule. The term "epimeric mixture" as used herein refers to a mixture in equal amount of two diastereomers of a molecule having two or more asymmetric carbon but distinguishing in configuration of only one stereogenic center. The term "stereoisomers" as used herein refers to isomeric molecules that have the same molecular formula and sequence of bonded atoms, but that differ only in the three-dimensional orientations of their atoms in space. The term "enantiomer" is one of two stereoisomers that are mirror images of each other that are non-superposable, much as one's left and right hands are the same except for opposite orientation. The term "diastereomers" or "diastereoisomers" as used herein refers to stereoisomers that are not enantiomers. Diastereomerism occurs when two or more stereoisomers of a compound have different configurations at one or more of the equivalent (related) stereocenters and are not mirror images of each other.

The term "alkyl", as used herein, is defined as including saturated, monovalent hydrocarbon radicals having straight, branched or cyclic moieties or combinations thereof and containing 1 to 50 carbon atoms, preferably 1 to 20 carbon atoms, more preferably 1 to 10 carbon atoms. The term "alkyl" encompassed substituted alkyl wherein the substituent is as defined above. For example, the "C₁-C₁₀ alkyl" refers but is not limited to methyl, ethyl, n-propyl, i-propyl, n-butyl, i-butyl, s-butyl, t-butyl, 1-pentyl, 2-pentyl, 3-pentyl, i-pentyl, neo-pentyl, t-pentyl, 1-hexyl, 2-hexyl, 3-hexyl, 1-methyl-1-ethyl-n-pentyl, 1,1,2-tri-methyl-n-propyl, 1,2,2-trimethyl-n-propyl, 3,3-dimethyl-n-butyl, 1-heptyl, 2-heptyl, 1-ethyl-1,2-dimethyl-n-propyl, 1-ethyl-2,2-dimethyl-n-propyl, 1-octyl, 3-octyl, 4-methyl-3-n-heptyl, 6-methyl-2-n-heptyl, 2-propyl-1-n-heptyl, 2,4,4-trimethyl-1-n-pentyl, 1-nonyl, 2-nonyl, 2,6-dimethyl-4-n-heptyl, 3-ethyl-2,2-dimethyl-3-n-pentyl, 3,5,5-trimethyl-1-n-hexyl, 1-decyl, 2-decyl, 4-decyl, 3,7-dimethyl-1-n-octyl, 3,7-dimethyl-3-n-octyl. For example, the term "C₁-C₆ alkyl" refers to, but is not limited to, methyl, ethyl, n-propyl, i-propyl, n-butyl, i-butyl, s-butyl, t-butyl, 1-pentyl, 2-pentyl, 3-pentyl, i-pentyl, neo-pentyl, t-pentyl, 1-hexyl, 2-hexyl, 3-hexyl, 1-methyl-1-ethyl-n-pentyl, 1,1,2-tri-methyl-n-propyl, 1,2,2-trimethyl-n-propyl, 3,3-dimethyl-n-butyl.

The term "cycloalkyl" as used herein is a cyclic alkyl group, that is to say, a monovalent, saturated, or unsaturated hydrocarbyl group having 1, 2 or more cyclic structure. Cycloalkyl includes all saturated hydrocarbon groups containing 1 to 5 rings, including monocyclic or bicyclic groups. Cycloalkyl groups may comprise 3 or more carbon atoms in the ring and generally, according to this invention comprise from 3 to 50 carbon atoms, preferably 3 to 20 carbon atoms, more preferably 3 to 10 carbon atoms. Cycloalkyl includes substituted cycloalkyl wherein the substituent is as defined above. For example, the term cycloalkyl may include cyclopropane, cyclobutane, cyclopentane, cyclohexane, cycloheptane, cyclooctane, cyclononane, or cyclodecane.

The term "alkenyl" as used herein, is defined as including both branched and unbranched, unsaturated hydrocarbon radicals having at least one double bond such as ethenyl (= vinyl), 1 methyl-1-ethenyl, 2, 2-dimethyl-1-ethenyl, 1-propenyl, 2-propenyl (= allyl), 1-butenyl, 2-butenyl, 3-butenyl, 4-pentenyl, 1-methyl-4-pentenyl, 3-methyl-1-pentenyl, 1-hexenyl, 2-hexenyl, and the like and being optionally substituted by at least one substituent selected from the group defined above.

The term "alkynyl" as used herein, is defined as including a monovalent branched or unbranched hydrocarbon radical containing at least one carbon-carbon triple bond, for example ethynyl, 2-propynyl (= propargyl), and the like and being optionally substituted by at least one substituent selected from the group defined above.

The term "aryl" as used herein, is defined as including an organic radical derived from an aromatic hydrocarbon consisting of 1 to 5 rings and containing 6-30 carbon atoms by removal of one hydrogen, such as phenyl and naphthyl each optionally substituted by substituents independently selected as defined above. Aryl radicals are preferably monocyclic or bicyclic containing 6-18 carbon atoms. Preferred aryl groups are phenyl and naphthyl each optionally substituted by 1 to 5 substituents independently selected from defined above.

The term "heterocycle", as used herein is defined as including an aromatic or non aromatic cyclic alkyl, alkenyl, or alkynyl moiety as defined above, having at least one O, S and/or N atom interrupting the carbocyclic ring structure and optionally, one of the carbon of the carbocyclic ring structure may be replaced by a carbonyl, optionally substituted by substituents independently selected as defined above. Non-limiting examples of aromatic heterocycles are pyridyl, furyl, pyrrolyl, thienyl, isothiazolyl, imidazolyl, benzimidazolyl, tetrazolyl, quinazolinyl, quinolizinyl, naphthyridinyl, pyridazinyl, pyrimidinyl, pyrazinyl, quinolyl, isoquinolyl, isobenzofuranyl, benzothienyl, pyrazolyl, indolyl, indolizinyl, purinyl, isoindolyl, carbazolyl, thiazolyl, 1,2,4-thiadiazolyl, thieno(2,3-b)furanyl, furopyranyl, benzofuranyl, benzoxepinyl, isooxazolyl, oxazolyl, thianthrenyl, benzothiazolyl, or benzoxazolyl, cinnolinyl, phthalazinyl, quinoxalinyl, phenanthridinyl, acridinyl, perimidinyl, phenanthrolinyl, phenothiazinyl, furazanyl, isochromanyl, indolinyl, xanthenyl, hypoxanthinyl, pteridinyl, 5-azacytidinyl, 5-azauracilyl, triazolopyridinyl, imidazolopyridinyl, pyrrolopyrimidinyl, and pyrazolopyrimidinyl optionally substituted by alkyl or as described above for the alkyl groups. Non-limiting examples of non aromatic heterocycles are tetrahydrofuranyl, tetrahydropyranyl, piperidinyl, piperidyl, piperazinyl, imidazolidinyl, morpholino, morpholinyl, 1-oxaspiro(4,5)dec-2-yl, pyrrolidinyl, 2-oxo-pyrrolidinyl, sugar moieties (i. e. glucose, pentose, hexose, ribose, fructose, which may also be substituted) or the same which can optionally be substituted with any suitable group, including but not limited to one or more moieties selected from lower alkyl, or other groups as described above for the alkyl groups. The term "heterocycle" also includes bicyclic, tricyclic and tetracyclic, spiro groups in which any of the above heterocyclic rings is fused to one or two rings independently selected from an aryl ring, a cyclohexane ring, a cyclohexene ring, a cyclopentane ring, a cyclopentene ring or another monocyclic heterocyclic ring or where a monocyclic heterocyclic group is bridged by an alkylene group, such as quinuclidinyl, 7-azabicyclo(2,2,1)heptanyl, 7-oxabicyclo(2,2,1)heptanyl, 8-azabicyclo(3,2,1)octanyl.

In the definitions set forth below, unless otherwise provided, R²⁰, R²¹ and R²² are the same or different and each are independently substituted or not C₁-C₅₀ alkyl, substituted or not C₂-C₅₀ alkenyl, substituted or not C₂-C₅₀ alkynyl, substituted or not C₆-C₁₈ aryl, substituted or not C₃-C₅₀ cycloalkyl, or heterocycle.

The term "oxy derivative", as used herein is defined as including - O-R²⁰ groups wherein R²⁰ is as defined above. Non-limiting examples are C₁-C₁₀ alkoxy, C₂-C₁₀ alkenyloxy, C₂-C₁₀ alkynyloxy, C₆-C₁₈ aryloxy.

The term "thio derivative" as used herein, is defined as including - S-R²⁰ groups wherein R²⁰ is as defined above. Non-limiting examples are alkylthio, alkenylthio, alkynylthio and arylthio.

The term "acyl derivative" as used herein, represents a radical derived from carboxylic acid and thus is defined as including groups of the formula -C(O)-R²⁰ wherein R²⁰ is as defined above or may be hydrogen. The term "thioketone" as used herein, represents a radical defined as including groups of the formula -C(S)-R²⁰ wherein R²⁰ is as defined above or may be hydrogen.

The term "sulfonyl derivative" as used herein, is defined as including a group of the formula -SO₂-R²⁰, wherein R²⁰ is as defined above or oxy derivatives. Non-limiting examples are alkylsulfonyl, alkenylsulfonyl, alkynylsulfonyl, alkoxysulfonyl (R²⁰ is an oxy derivative as defined above) and arylsulfonyl.

The term "sulfinyl derivative" as used herein, is defined as including a group of the formula -S(O)-R²⁰, wherein R²⁰ is as defined above. Non-limiting examples are alkylsulfinyl, alkenylsulfinyl, alkynylsulfinyl and arylsulfinyl.

The term "N-acyl derivative" as used herein is defined as including a group of the formula -N(R²⁰)C(O)-R²¹, wherein R²⁰ and R²¹ are as defined above or hydrogen or are taken together with the -N-C(O)- moiety to which they are attached to form a four to twenty-membered heterocycle. Preferably R²⁰ is hydrogen and R²¹ is as defined above.

The term "halogen", as used herein, includes an atom of Cl, Br, F, I. The term "cyano", as used herein, represents a group of the formula -CN. The term "thiocyanate", as used herein, represents a group of the formula -SCN. The term "cyanamide", as used herein, represents a group of the formula - N(R²⁰)-CN wherein R²⁰ is defined above. The term "nitro", as used herein, represents a group of the formula -NO₂. The term "sulfonamide", as used herein, represents a group of the formula -SO₂NR²⁰R²¹ wherein R²⁰ and R²¹ are as defined above or are taken together with the nitrogen atom to which they are attached to form a four to twenty-membered heterocycle. The term "ester" as used herein is defined as including a group of formula -C(O)-O-R²⁰ or -O-C(O)-R²⁰ wherein R²⁰ is as defined above. The term "thioester" as used herein is defined as including a group of formula -C(O)-S-R²⁰ or -S-C(O)-R²⁰ wherein R²⁰ is as defined above. The term "dithioester" as used herein is defined as including a group of formula -C(S)-S-R²⁰ or -S-C(S)-R²⁰ wherein R²⁰ is as defined above. The term "ether" is defined as including a group selected from C₁-C₅₀ straight or branched alkyl, or C₂-C₅₀ straight or branched alkenyl or alkynyl groups or a combination of the same, interrupted by one or more oxygen atoms. The term "thioether" is defined as including a group selected from C₁-C₅₀ straight or branched alkyl, or C₂-C₅₀ straight or branched alkenyl or alkynyl groups or a combination of the same, interrupted by one or more sulfur atoms. The term "amido" is defined as including a group of formula -C(O)NH₂ or-CONHR²⁰ or -CONR²⁰R²¹ wherein R²⁰ and R²¹ are as defined above or are taken together with the nitrogen atom to which they are attached to form a four to twenty-membered heterocycle. The term "thioamido" is defined as including a group of formula -C(S)NH₂ or-C(S)NHR²⁰ or -C(S)NR²⁰R²¹ wherein R²⁰ and R²¹ are as defined above or are taken together with the nitrogen atom to which they are attached to form a four to twenty-membered heterocycle.

The term "hydroxyl" as used herein refers to a group of formula - OH. The term "thiol" as used herein refers to a group of formula -SH. The term "nitrate" as used herein refers to a group of formula -NO₃⁻. The term "phosphate" as used herein refers to a group of formula -O-P(O)(OR²⁰)(OR²¹) wherein R²⁰ and R²¹ are as defined above or hydrogen. The term "thiophosphate" as used herein refers to a group of formula -O-P(S)(OR²⁰)(OR²¹) wherein R²⁰ and R²¹ are defined as above or hydrogen. The term "carboxylic acid" as used herein refers to a group of formula -CO₂H. The term "phosphinic acid" as used herein refers to a group of formula - P(O)(OR²⁰)(R²¹) wherein R²⁰ and R²¹ are as defined above or hydrogen. The term "sulfonic acid" as used herein refers to a group of formula -SO₃H. The term "ammonium" as used herein refers to a group of formula -N⁺(R²⁰)(R²¹)(R²²) wherein R²⁰ R²¹, R²² are as defined above or hydrogen, or R²⁰, R²¹ and/or R²² are taken together with the nitrogen atom to which they are attached to form a four to twenty-membered heterocycle. The term "amino" refers to a group of formula -NR²⁰R²¹ wherein R²⁰ and R²¹ are as defined above or R²⁰ and R²¹ are taken together to form with the nitrogen atom to which they are attached a four to twenty membered heterocyle. The term "diazo" as used herein refers to a group of formula -N₂⁺. The term "oxime" as used herein refers to a group of formula -(R²⁰)C=N-OH. The term "hydroxamic acid" as used herein refers to a group of formula -C(O)-NH-OH. The term "peroxide" as used herein refers to a group of formula -O-O-R²⁰ wherein R²⁰ is as defined above. The term "imine" as used herein refers to a group of formula -C=N-R²⁰ wherein R²⁰ is as defined above.

As mentioned above, in a first aspect, the present invention relates to a process for the separation of stereoisomers of a chiral compound, said process comprising the steps of:
(a) Forming a solution comprising :
   ● A first selection (p) of one or more of the stereoisomers (pi)
   ● A second selection (σ) of one or more of the stereoisomers (σi) at a given ratio (ρ/σ) between the first (p) and second (σ) selections of one or more stereoisomers
   ● an optically active coformer (C), and
   ● a solvent (sv),
      wherein at a given crystallization temperature, Tc, the ternary phase diagrams between each of the stereoisomer (pi) of the first selection (p), the optically active coformer (C) and the solvent (sv) comprise at least two eutectic points defining a zone of co-crystallization (Cpi) between each stereoisomer (pi) of the first selection (p) and the optically active coformer (C),
(b) bringing and maintaining the solution to said crystallization temperature such as to form co-crystals (Cpi) of the coformer with each stereoisomer (pi) of the first selection (p), without forming any salt,
(c) separating the co-crystals from the rest of the solution;
**characterized in that,**
for said content ratio (ρ/σ) between the first selection (p) and the second selection (σ), the concentrations of the coformer and of the solvent are selected such that at least part of each of the stereoisomers (pi) of the first selection (p) co-crystallizes with the coformer and such that 100% of each of the stereoisomers (σi) of the second selection (σ) remains in solution over step (b) of the process.

The present process allows the separation of a selection of stereoisomers from the rest of the stereoisomers present in a mixture containing a plurality of stereoisomers. For example, when the mixture contains four stereoisomers, the process can be applied to separate one, two or three stereoisomers from the rest of the mixture. The process can be repeated with the stereoisomers recovered from the co-crystals or from the rest of the stereoisomers contained in the solution; preferably, the process can be repeated with the stereoisomers recovered from the co-crystals. Hence, the present process may further comprise the step (d) of dissociating the co-crystals obtained in step (c) and isolating a solution comprising stereoisomers (pi) issued from said first selection (p) having co-crystallized with the coformer. Furthermore, the present process may further comprise the step of repeating the present process with stereoisomers obtained in step (d) until only one optically active form of the chiral compound co-crystallized with an optically active coformer is isolated. Alternatively, the present process may be repeated with the solution recovered after step (c). Then, the solution can be purified until one or more of the stereoisomers are isolated.

In a preferred embodiment, the present process is implemented for the separation of enantiomers or diastereoisomers of a chiral compound. The process may be provided and implemented from a mixture containing two enantiomers or diastereomers, thus leading to an enantiospecific or enantioselective process. Hence, the first selection (p) and the second selection (σ) are the first (R) and second (S) enantiomers or diastereomers respectively. Said process comprises the steps of:
(a) Forming a solution comprising:
   ● a first enantiomer or diastereomer (R) of said chiral compound
   ● a second enantiomer or diastereomer (S) of said chiral compound, at a given content ratio (R/S) between the first and second enantiomers or diastereomers,
   ● an optically active coformer (C), and
   ● a solvent (sv),
      wherein at a given crystallization temperature, Tc, the ternary phase diagram between the first enantiomer or diastereomer (R), the optically active coformer (C) and the solvent (Sv) comprises at least two eutectic points defining a zone of co-crystallization (CR) between the first enantiomer or diastereomer and the optically active coformer,
(b) bringing and maintaining the solution to said crystallization temperature such as to form co-crystals (CR) of the coformer with the first enantiomer or diastereomer, without forming any salt,
(c) separating the co-crystals from the rest of the solution;
   characterized in that, for said content ratio (R/S) between the first and second enantiomers or diastereomers, the concentrations of the coformer and of the solvent are selected such that at least part of the first enantiomer co-crystallizes with the coformer and such that 100% of the second enantiomer or diastereomer (S) remains in solution over step (b) of the process.

The present process may further comprise the step of heating the solution until complete dissolution in said solvent of said coformer and said first and second enantiomers or diastereomers, or said first and second selections. All components of the solution are dissolved in the solvent to avoid emulsion or suspension formation.

The present process can be applied to a large selection of chiral compounds. In particular, the present process can be applied to the chiral resolution of compounds that do not form salts or do not easily form salts, for which no chiral resolution process by crystallization is known.

During the step (b) of the process, only the first enantiomer or diastereomer (R) co-crystallizes with the coformer or only each stereoisomer (pi) of the first selection (p) co-crystallizes with the coformer. No salts are formed during the co-crystallization process. The second enantiomer (S) or each stereoisomer (σi) of the second selection (σ) remains in solution over this step, i.e. 100% of the second enantiomer (S) or of each stereoisomer (σi) of the second selection (σ) remains in solution over this step (b).

In a first preferred embodiment, the chiral compound may be a compound having amido or thioamido functional group on its backbone. This kind of functional groups is known to be unable to form salts. The chiral compound may have general formula R-C(X)-NR¹R² (I) wherein R, R¹ and R² are the same or different and are independently selected from the group consisting of hydrogen, substituted or not C₁-C₅₀ alkyl, substituted or not C₂-C₅₀ alkenyl, substituted or not C₂-C₅₀ alkynyl, substituted or not C₃-C₅₀ cycloalkyl, substituted or not C₆-C₁₈ aryl or substituted or not heterocycle; X is oxygen or sulfur; or R, R¹ and/or R² are taken together with the -C(X)-N- moiety to which they are attached to form a four to twenty-membered heterocycle. R, R¹ and R² are selected such that a chiral compound is formed, i.e. such that at least one asymmetric carbon is present on R, R¹ or R² moiety. Preferably, R may be substituted or not C₁-C₅₀ alkyl, substituted or not C₂-C₅₀ alkenyl, substituted or not C₂-C₅₀ alkynyl, substituted or not C₃-C₅₀ cycloalkyl, substituted or not C₆-C₁₈ aryl or substituted or not heterocycle. When R, R¹ and/or R² are taken together with the -C(X)-N- moiety to which they are attached to form a four to twenty-membered heterocycle, said four to twenty-membered heterocycle may be substituted by one or more substituent as defined above.

Preferably, the chiral compound may be a chiral pyrrolidinone of general formula (II) 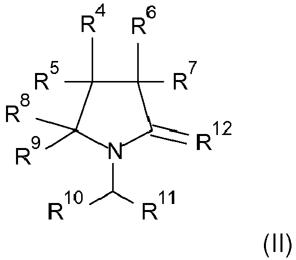 wherein
R¹² is independently oxygen, sulfur;
R⁴, R⁵, R⁶, R⁷, R⁸, R⁹, R¹⁰ and R¹¹ are the same or different and each is independently hydrogen, halogen, hydroxyl, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, hydroxamic acid. R⁴, R⁵, R⁶, R⁷, R⁸, R⁹, R¹⁰ and R¹¹ are selected such that at least one asymmetric carbon is present on the compound in order to have a chiral compound. More preferably, the chiral compound may be a chiral pyrrolidinone of general formula (II) 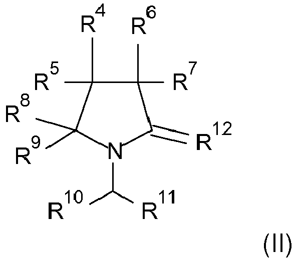 wherein
R¹¹ is selected from the group consisting of halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative;
R¹⁰ is selected from the group consisting of hydrogen, halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, an oxy derivative, thio derivative, acyl derivative, thioketone, sulfonyl derivative or sulfinyl derivative;
R¹² is independently oxygen, sulfur;
R⁴, R⁵, R⁶, R⁷, R⁸ and R⁹ are the same or different and each is independently hydrogen, halogen, hydroxyl, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, hydroxamic acid. Most preferably, the chiral compound may be the compound of general formula (III) 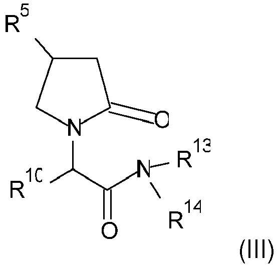 wherein
R¹⁰, R¹³ and R¹⁴ are the same or different and are independently selected from the group consisting of substituted or not C₁-C₅₀ alkyl group, substituted or not C₂-C₅₀ alkenyl, substituted or not C₂-C₅₀ alkynyl, substituted or not C₃-C₅₀ cycloalkyl, substituted or not C₆-C₁₈ aryl or hydrogen, preferably substituted or not C₁-C₅₀ alkyl group or hydrogen,
R⁵ is selected from the group consisting of hydrogen, substituted or not C₁-C₅₀ alkyl, substituted or not C₂-C₅₀ alkenyl group, substituted or not C₂-C₅₀ alkynyl, substituted or not C₃-C₅₀ cycloalkyl, hydroxyl, substituted or not C₆-C₁₈ aryl; with the proviso that when R⁵ is hydrogen and R¹⁰ are hydrogen, R¹³ or R¹⁴ bears at least one asymmetric carbon atom.
In particular, the chiral compound may of general formula (III) wherein R¹⁰ is substituted or not C₁-C₅₀ alkyl group or hydrogen; R⁵ is selected from the group consisting of hydrogen, C₁-C₅₀ alkyl optionally substituted by 1 to 3 halogens, C₂-C₅₀ alkenyl group, hydroxyl, C₆-C₁₈ aryl; R¹³ and R¹⁴ are the same or different and are independently selected from the group consisting of substituted or not C₁-C₅₀ alkyl group, substituted or not C₆-C₁₈ aryl or hydrogen; with the proviso that when R⁵ and R¹⁰ are hydrogen, R¹³ or R¹⁴ bears at least one asymmetric carbon atom. Preferably, the chiral compound may of general formula (III) wherein R¹³ and R¹⁴ are hydrogen, R¹⁰ is a C₁-C₅₀ alkyl group, C₂-C₅₀ alkenyl, C₂-C₅₀ alkynyl, C₃-C₅₀ cycloalkyl, C₆-C₁₈ aryl or hydrogen, preferably C₁-C₅₀ alkyl group or hydrogen; R⁵ is selected from the group consisting of hydrogen, C₁-C₅₀ alkyl, C₂-C₅₀ alkenyl group, C₂-C₅₀ alkynyl, C₃-C₅₀ cycloalkyl, hydroxyl, C₆-C₁₈ aryl; with the proviso that when R⁵ is hydrogen, R¹⁰ is not hydrogen.

In particular, the chiral compound may be 2-(2-oxopyrrolidin-1-yl)butanamide, 2-[4-(2,2-difluorovinyl)-2-oxopyrrolidin-1-yl]butanamide, 2-[2-oxo-4-n-propylpyrrolidin-1-yl]butanamide, 2-(4-hydroxy-2-oxo-1-pyrrolidinyl)acetamide, N-[2-(2,6-dimethyl-1-piperidinyl)ethyl]-2-(2-methyl-5-oxo-1-pyrrolidinyl)acetamide, 2-(2-methyl-5-oxo-1-pyrrolidinyl)-N-[2-(1-piperidinyl)propyl]acetamide, 2-(2-oxo-1-pyrrolidinyl)-N-[3-(2,2,4,6-tetramethyl-1-piperidinyl)propyl]acetamide, N-[2-(diisobutylamino)ethyl]-2-(2-oxo-1-pyrrolidinyl)acetamide, 2-[(4R)-2-oxo-4-propylpyrrolidin-1-yl] butanamide, (2S)-2-[2-oxo-4-propylpyrrolidin-1-yl] butanamide, 2-(2-oxo-4-phenylpyrrolidin-1-yl)acetamide, 5-(piperidine-1-carbonyl) pyrrolidin-2-one, 3,6,7,7a-tetrahydro-1H-pyrrolo[1,5-a]imidazole-2,5-dione, 4-(3-cyclopentyloxy-4-methoxyphenyl)pyrrolidin-2-one, (2S)-2-[4-(2,2-difluorovinyl)-2-oxopyrrolidin-1-yl]butanamide, (4R)-2-[4-(2,2-difluorovinyl)-2-oxopyrrolidin-1-yl]butanamide.

In a second preferred embodiment, the chiral compound may be a compound that do not bear any acidic or basic functional groups. Hence, in this preferred embodiment, the chiral compound may not contain acidic or basic functional groups selected from the group consisting hydroxyl, thiol, diazo, oxime, hydroxamic acid, nitrate, amino, carboxylic acid, phosphonic acid, phosphinic acid, sulfonic acid, ammonium, imine. Then, the process can successfully applied with a chiral compound, this latter being an hydrocarbon bearing one or more functional groups, each functional groups being selected from the group consisting of halogen, nitro, cyano, thiocyanate, cyanamide, amido, thioamido, sulfonamide, ester, thioester, dithioester, ether, thioether, peroxide, an oxy derivative, thio derivative, acyl derivative, thioketone, sulfonyl derivative or sulfinyl derivative. With respect to this preferred embodiment, the terms amido, thioamido, sulfonamide, ester, thioester, dithioester, ether, thioether, peroxide, an oxy derivative, thio derivative, acyl derivative, thioketone, sulfonyl derivative or sulfinyl derivative are as defined above wherein R²⁰, R²¹ and R²² are the same or different and each are independently substituted or not C₁-C₅₀ alkyl, substituted or not C₂-C₅₀ alkenyl, substituted or not C₂-C₅₀ alkynyl, substituted or not C₆-C₁₈ aryl, substituted or not C₃-C₅₀ cycloalkyl, or heterocycle, the term substituted referring to one or more substituents selected from the group consisting of alkyl, alkenyl, alkynyl, cycloalkyl, aryl, heterocycle, halogen, nitro, cyano, isocyanate, thiocyanate, cyanamide, amido, thioamido, sulfonamide, ester, thioester, dithioester, ether, thioether, peroxide, oxy derivative, thio derivative, acyl derivative, thioketone, N-acyl derivative, sulfonyl derivative or sulfinyl derivative with the proviso that said substituents do not contain any acidic or basic functional groups selected from the group consisting hydroxyl, thiol, diazo, oxime, hydroxamic acid, nitrate, amino, carboxylic acid, phosphonic acid, phosphinic acid, sulfonic acid, ammonium, imine. Hence, the chiral compound may have general formula R-C(X)-NR¹R² (IV) wherein R, R¹ and R² are the same or different and are independently selected from the group consisting of hydrogen, substituted or not C₁-C₅₀ alkyl, substituted or not C₂-C₅₀ alkenyl, substituted or not C₂-C₅₀ alkynyl, substituted or not C₃-C₅₀ cycloalkyl, substituted or not C₆-C₁₈ aryl or substituted or not heterocycle; X is oxygen or sulfur; or R, R¹ and/or R² are taken together with the -C(X)-N- moiety to which they are attached to form a four to twenty-membered heterocycle. R, R¹ and R² are selected such that a chiral compound is formed, i.e. such that at least one asymmetric carbon is present on the compound. Preferably, R may be substituted or not C₁-C₅₀ alkyl, substituted or not C₂-C₅₀ alkenyl, substituted or not C₂-C₅₀ alkynyl, substituted or not C₃-C₅₀ cycloalkyl, substituted or not C₆-C₁₈ aryl or substituted or not heterocycle. When R, R¹ and/or R² are taken together with the -C(X)-N- moiety to which they are attached to form a four to twenty-membered heterocycle, said four to twenty-membered heterocycle may be substituted as defined for the second preferred embodiment, for example by - C(O)-piperidine.
Preferably, the chiral compound may be a chiral pyrrolidinone of general formula (V) 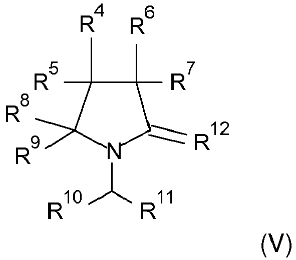 wherein
R¹² is independently oxygen, sulfur;
R⁴, R⁵, R⁶, R⁷, R⁸, R⁹, R¹⁰ and R¹¹ are the same or different and each is independently hydrogen, halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative. R⁴, R⁵, R⁶, R⁷, R⁸, R⁹, R¹⁰ and R¹¹ are selected such that at least one asymmetric carbon is present on the compound in order to have a chiral compound.
More preferably, the chiral compound may be a chiral pyrrolidinone of general formula (V) 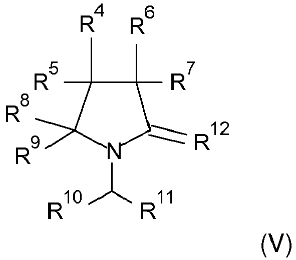 wherein
R¹¹ is selected from the group consisting of halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative;
R¹⁰ is selected from the group consisting of hydrogen, halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, an oxy derivative, thio derivative, acyl derivative, thioketone, sulfonyl derivative or sulfinyl derivative;
R¹² is independently oxygen, sulfur;
R⁴, R⁵, R⁶, R⁷, R⁸ and R⁹ are the same or different and each is independently hydrogen, halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative.
Most preferably, the chiral compound may be the compound of general formula (VI) 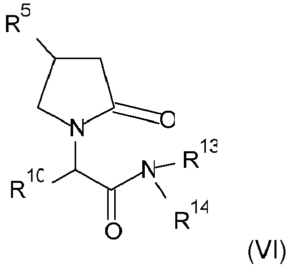 wherein
R¹⁰, R¹³ and R¹⁴ are the same or different and are independently selected from the group consisting of substituted or not C₁-C₅₀ alkyl group, substituted or not C₂-C₅₀ alkenyl, substituted or not C₂-C₅₀ alkynyl, substituted or not C₃-C₅₀ cycloalkyl, substituted or not C₆-C₁₈ aryl or hydrogen, preferably substituted or not C₁-C₅₀ alkyl group or hydrogen,
R⁵ is selected from the group consisting of hydrogen, substituted or not C₁-C₅₀ alkyl, substituted or not C₂-C₅₀ alkenyl group, substituted or not C₂-C₅₀ alkynyl, substituted or not C₃-C₅₀ cycloalkyl, substituted or not C₆-C₁₈ aryl; with the proviso that when R⁵ and R¹⁰ are hydrogen, R¹³ or R¹⁴ bears at least one asymmetric carbon atom.
In particular, the chiral compound may be of general formula (VI) wherein R¹⁰ is substituted or not C₁-C₅₀ alkyl group or hydrogen; R⁵ is selected from the group consisting of hydrogen, C₁-C₅₀ alkyl optionally substituted by 1 to 3 halogens, C₂-C₅₀ alkenyl group, C₆-C₁₈ aryl; R¹³ and R¹⁴ are the same or different and are independently selected from the group consisting of substituted or not C₁-C₅₀ alkyl group, substituted or not C₆-C₁₈ aryl or hydrogen; with the proviso that when R⁵ and R¹⁰ are hydrogen, R¹³ or R¹⁴ bears at least one asymmetric carbon atom.

In particular, the chiral compound may be 2-(2-oxopyrrolidin-1-yl)butanamide, 2-[4-(2,2-difluorovinyl)-2-oxopyrrolidin-1-yl]butanamide, 2-[2-oxo-4-n-propylpyrrolidin-1-yl]butanamide, 2-[(4R)-2-oxo-4-propylpyrrolidin-1-yl] butanamide, (2S)-2-[2-oxo-4-propylpyrrolidin-1-yl] butanamide, 2-(2-oxo-4-phenylpyrrolidin-1-yl)acetamide, 2-(2-oxo-4-phenylpyrrolidin-1-yl)acetamide, 5-(piperidine-1-carbonyl)-pyrrolidin-2-one, 3,6,7,7a-tetrahydro-1H-pyrrolo[1,5-a]imidazole-2,5-dione, 4-(3-cyclopentyloxy-4-methoxy-phenyl)pyrrolidin-2-one, (2S)-2-[4-(2,2-difluorovinyl)-2-oxopyrrolidin-1-yl]butanamide, (4R)-2-[4-(2,2-difluorovinyl)-2-oxopyrrolidin-1-yl]butanamide.

In a third preferred embodiment, the chiral compound may be proprionic acid derivatives. Said chiral compound may have general formula (R¹⁵)(R¹⁶)(R¹⁷)C-CO₂H (VII) wherein R¹⁵, R¹⁶ and R¹⁷ are different and independently selected from the group consisting of hydrogen, substituted or not C₁-C₅₀ alkyl group, substituted or not C₂-C₅₀ alkenyl, substituted or not C₂-C₅₀ alkynyl, substituted or not C₃-C₅₀ cycloalkyl, substituted or not C₆-C₁₈ aryl and substituted or not heterocycle, halogen, hydroxyl, nitro, cyano, thiocyanate, cyanamide, amido, thioamido, sulfonamide, ester, thioester, dithioester, ether, thioether, peroxide, oxy derivative, thio derivative, acyl derivative, thioketone, sulfonyl derivative or sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, hydroxamic acid. Preferably, said chiral compound may have general formula (R¹⁵)(R¹⁶)(R¹⁷)C-CO₂H (VII) wherein R¹⁵, R¹⁶ and R¹⁷ are different and independently selected from the group consisting of hydrogen, substituted or not C₁-C₅₀ alkyl group, substituted or not C₂-C₅₀ alkenyl, substituted or not C₂-C₅₀ alkynyl, substituted or not C₃-C₅₀ cycloalkyl, substituted or not C₆-C₁₈ aryl and substituted or not heterocycle. More preferably, said chiral compound may have general formula (R¹⁵)(R¹⁶)CH-CO₂H (VII) wherein R¹⁵ and R¹⁶ are different and independently selected from the group consisting of substituted or not C₁-C₅₀ alkyl group and substituted or not C₆-C₁₈ aryl. Most preferably, said chiral compound may be 2-(4-(2-methylpropyl)phenyl)propanoic acid or 2-(6-methoxynaphthalen-2-yl)propanoic acid.

In the present process, the ratio (R/S) between the first and second enantiomers or diastereomers or the ratio (ρ/σ) between the first selection (p) and the second selection (σ), may range from 10/90 to 90/10, preferably from 30/70 to 70/30, more preferably from 40/60 to 60/40, most preferably it is substantially equal to 50/50. Then, the present process may be used to separate racemic or epimeric mixture of a chiral compound.

The crystallization temperature may range from -40°C to boiling temperature of the solvent, preferably from -20°C to 40°C.

The step (b) of the process may be performed by cooling crystallization, anti-solvent crystallization, evaporative crystallization, slurring crystallization, or seeding crystallization. The term evaporative crystallization means that part of the solvent is evaporated at atmospheric pressure but not until complete evaporation.

In the present process, the chiral compound may have at least one of the functional groups bonded to at least one asymmetric carbon or to a carbon atom adjacent to at least one asymmetric carbon, preferably at least one of the functional groups may be bonded to at least one asymmetric carbon or to a carbon atom adjacent to at least one asymmetric carbon to be resolved.

The solvent may be water or one or more organic solvents, or mixture thereof. Preferably said solvent may be one or more organic solvents selected from the group consisting of substituted or not C₁-C₁₀ alkyl, substituted or not C₃-C₁₀ cycloalkyl, substituted or not C₆-C₁₈ aryl, substituted or not C₁-C₁₀ alkenyl, substituted or not C₁-C₁₀ alkynyl, or heterocycle. Solvent may be anhydrous or not. Non limitative examples of solvent are water, methanol, ethanol, isopropanol, acetonitrile, diethylether, ethyl acetate, toluene, benzene, tetrahydrofuran, N,N-dimethylformamide, dimethylsulfoxide, pentane, hexane, heptane, diethylamine, triethylamine, ter-butyl methyl ether, cyclohexane, acetone, methyl isobutyl ketone, 1-propanol, methyl ethyl ketone, 2-butanol, 1-butanol, diethyl ketone, 1-octanol, p-xylene, m-xylene, o-xylene, dimethoxyethane, butyl acetate, 1-chlorobutane, N,N-dimethylacetamide, 2-ethoxyethyl ether, 2-methoxyethanol, pyridine, propanoic acid, 2-methoxyethyl acetate, benzonitrile, 1-methyl-2-pyrrolidinone, 1,4-dioxane, acetic acid, thlorobenzene, 1,2-dichloroethane, methylene chloride, chloroform, carbon tetrachloride, tetrachloroethylene, diethylene glycol, hexamethylphosphoramide, heavy water (or deuterium oxide).

According to the present invention, the optically active coformer may have at least one functional group selected from the group consisting of halogen, nitro, cyano, thiocyanate, cyanamide, amido, thioamido, sulfonamide, ester, thioester, dithioester, ether, thioether, oxy derivative, thio derivative, acyl derivative, thioketone, sulfonyl derivative, sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, peroxide, hydroxamic acid, and hydroxyl. Non limitative examples of coformer are tartaric acid, mandelic acid, proline, levetiracetam, brivaracetam, dibenzoyltartaric acid, 1,2-cyclohexanediol, 2,4-dihydroxybenzoic acid, citric acid, p-hydroxy-benzoic acid. The optically active coformer may be selected in function of the chiral compound.

In a preferred embodiment, the chiral compound may be a compound of general formula (I), (II), (III), (IV), (V) or (VI) and the coformer may be an optically active form of tartaric acid, ibuprofen or mandelic acid. Preferably, the chiral compound may a compound of general formula (IV), (V) or (VI) and the coformer may be an optically active form of tartaric acid, ibuprofen or mandelic acid. More preferably, the chiral compound may a compound of general formula (IV), (V) or (VI) and the coformer may be an optically active form of tartaric acid, ibuprofen or mandelic acid and the solvent may be acetonitrile or ethanol. In another embodiment, the chiral compound may a compound of general formula (VII) and the coformer may be levetiracetam or an optically active form of proline.

The solvent may represent from 10 to 99 mol% of the solution formed in step (a), preferably from 30 to 95 mol% of the solution. Then, the coformer and the stereoisomers, in particular the first and second enantiomers or diastereoisomers may represent from 1 to 90 mol%, preferably from 5 to 70 mol% of the solution.

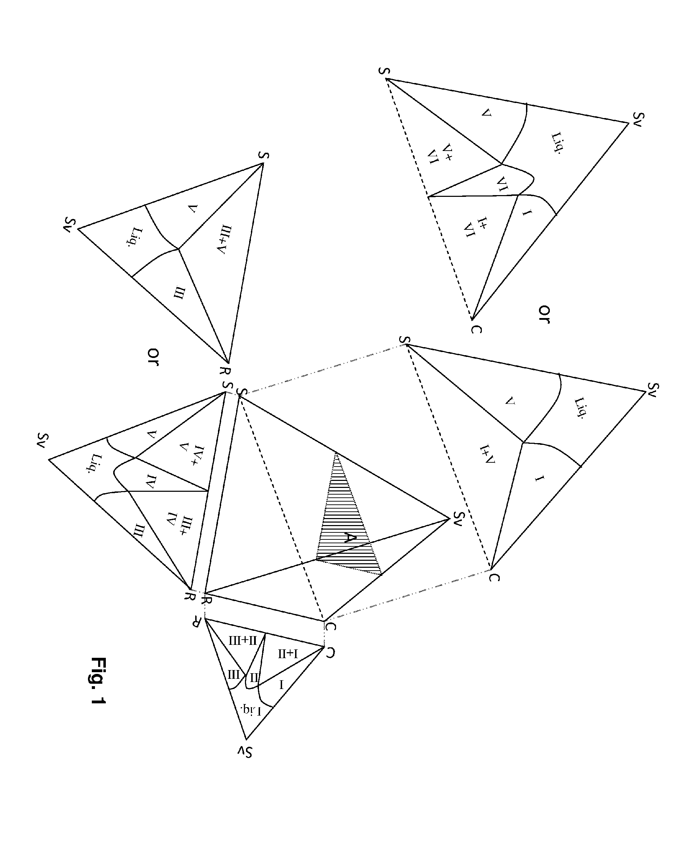

For the realization of the present process, the phase diagrams between the various components of the solution of step (b) is analyzed. Figure 1 shows a typical quaternary diagram R-S-C-Sv at a given crystallization temperature, Tc, between a first and second enantiomers or diastereomers (R, S) to be resolved, an optically active coformer (C), and a solvent (Sv), represented in the form of a tetrahedral. To allow the present process to be carried out successfully, the ternary phase diagram R-C-Sv between the first enantiomer or diastereomer (R), the optically active coformer (C) and the solvent (Sv), represented in Figure 1 as an unfolded face of the quaternary diagram, must comprise at least two eutectic points defining a zone (II) of co-crystallization (CR) between the first enantiomer or diastereomer and the optically active coformer. A typical ternary phase diagram between the first enantiomer or diastereomer (R), the optically active coformer (C) and the solvent (Sv) may contain six zones:
● liquidus (noted 'liq.'),
● a zone (I) wherein crystal of coformer and liquid coexist,
● a zone (II) wherein co-crystal (CR) comprising the coformer (C) and the first enantiomer or diastereomer (R) coexists with the liquid,
● a zone (III) wherein crystals of the first enantiomer (R) and liquid coexist
● a zone (I+II) wherein crystals of the coformer (C), co-crystals (CR) comprising the coformer (C) and the first enantiomer or diastereomer (R) and liquid coexist,
● a zone (II+III) wherein crystals of the first enantiomer or diastereomer (R), co-crystals (CR) comprising the coformer (C) and the first enantiomer (R) and liquid coexist.

The presence of at least two eutectic points, at a given crystallization temperature, is necessary to observe the formation of co-crystals between the first enantiomer or diastereomer and the coformer. The phase diagram R-C-Sv of Figure 1 shows two eutectic points defined at the two lowest points of the liquidus (liq) boundary forming a "W". Fig. 1 detailed three out of four faces of the quaternary phase diagram of a solution R-S-C-Sv suitable for the present invention. The unfolded face represented on the right hand side of the quaternary diagram represents the ternary phase diagram R-C-Sv between the first enantiomer or diastereomer (R), the optically active coformer (C) and the solvent (Sv); as discussed above it comprises two eutectic points. The hidden face (with dotted line) represents the ternary phase diagram S-C-Sv between the second enantiomer or diastereomer (S), the optically active coformer (C) and the solvent (Sv). The front face of the quaternary diagram represents the ternary phase diagram R-S-Sv between the solvent (Sv), the second enantiomer or diastereomer (S), and the first enantiomer or diastereomer (R). The ternary phase diagram R-S-C at the base of the quaternary diagram between the coformer (C), the first (R) and the second (S) enantiomers or diastereomers is not shown because it is not relevant to the present invention since corresponding to a system with no solvent. On the other hand, a ternary diagram R-S-C at a given amount of solvent, corresponding to a slice (A) parallel to the base of the quaternary diagram, is the key to success of the present invention as discussed in the following. The zone noted 'IV' represents a zone wherein the first (R) and the second (S) enantiomers or diastereomers crystallize and coexist with the liquid. The zone noted 'V' represents a zone wherein the second (S) enantiomers or diastereomers crystallizes and coexist with the liquid. The zone noted 'VI' represents a zone wherein the second (S) enantiomers or diastereomers co-crystallizes with the coformer and coexist with the liquid. Several zones wherein two of the above mentioned zone I-VI coexist may also appear on the ternary phase diagram. The presence or absence of these zones or combination of these zones will depend on the solvent concentration and temperature conditions.

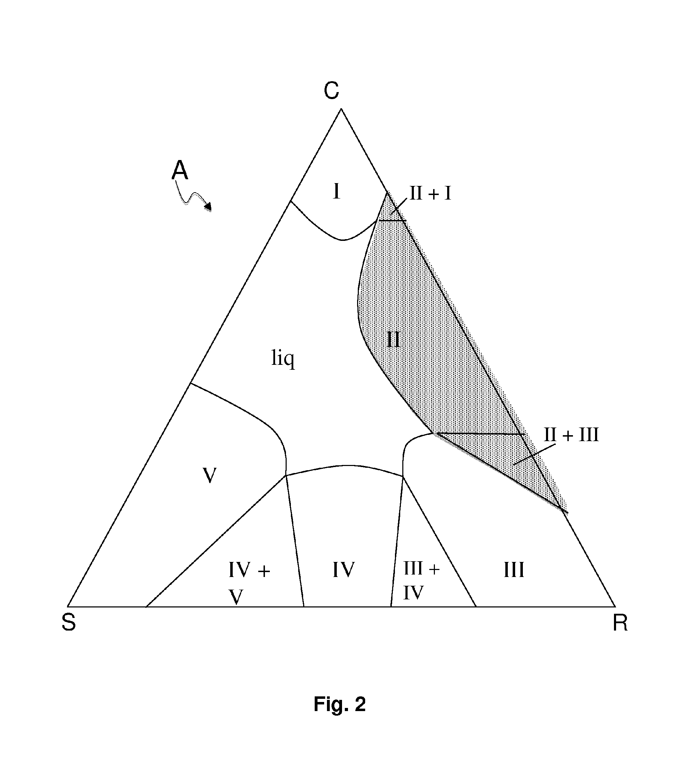

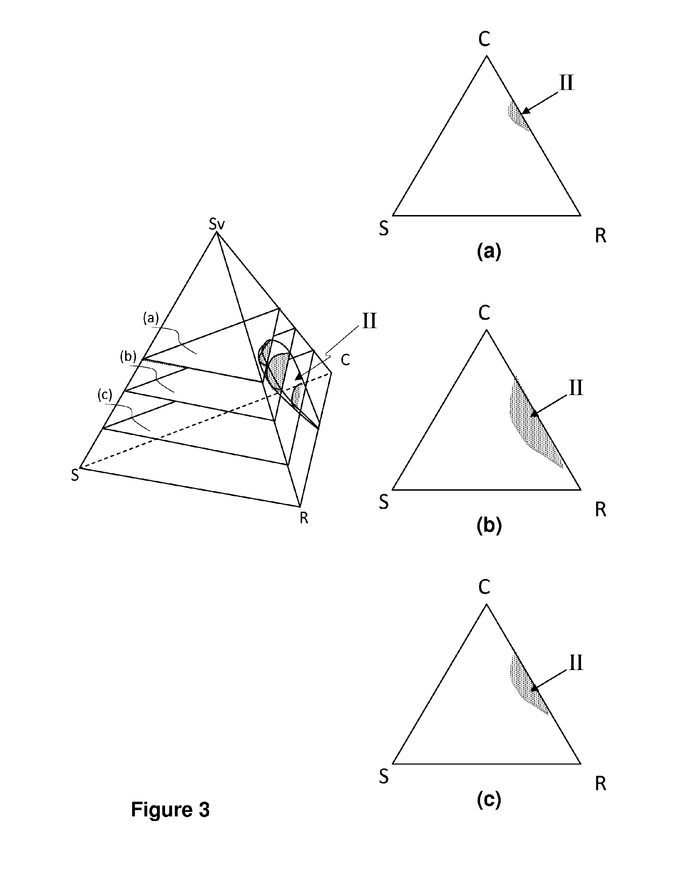

In the quaternary diagram, each zones of each ternary phase diagram forms a volume which extends into the interior of the tetrahedral defined by the faces of the quaternary phase diagram. At a given concentration of the solvent (Sv), a zone A can be extracted from the quaternary phase diagram which defines a ternary phase diagram R-S-C for a given crystallization temperature and for a given concentration of the solvent, between the coformer C and the first and second enantiomers or diastereoisomers. An enlarged view of the zone A is shown in Fig. 2. The concentration of the solvent can be selected such that the ternary phase diagram A comprises a zone wherein the first enantiomer or diastereomer co-crystallizes with the coformer (Fig. 2, zone II). As the ratio (R/S) between the first and the second enantiomer or diastereomer is known, the concentration of the coformer required for the formation of co-crystals (CR) of the coformer (C) with the first enantiomer or diastereomers (R) while the second enantiomers or diastereomers remain in solution over the crystallization process can easily be determined. The experimental conditions may be defined by selecting a point within one of the zone I+II,II or II+III in the ternary phase diagram A, preferably within zone II where only co-crystals (CR) are formed. As illustrated in Figure 3, the size of the zone II of co-crystals (CR) varies as a function of the concentration of the solvent selected. For example, fig. 3 may represent the ternary phase diagram R-S-C at a concentration of the solvent of 30 mol%, 50 mol% and 70 mol% of the total solution respectively, which correspond to slices, A, taken at different altitudes in the quaternary phase diagram R-S-C-Sv. The skilled person will then preferably select a concentration of the solvent at which the zone II, alone or in combination with the zone I or III, predominantly exists.

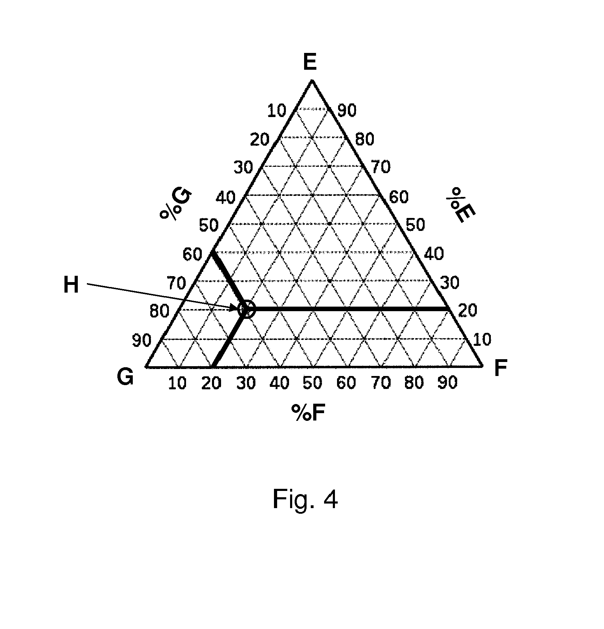

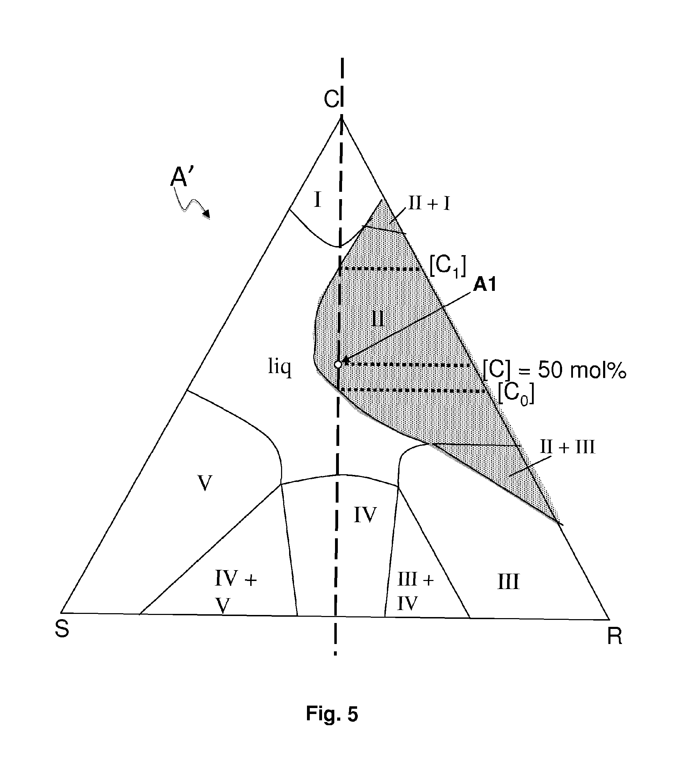

The concentration of the coformer may be read according to the common procedure known in the art from a ternary phase diagram. Fig. 4 represents a schematic ternary phase diagram E-F-G between any three components E, F and G. At a given point on the ternary phase diagram (represented by a white circle) three lines, each of them being parallel to an edge of the triangle EF, FG, and EG, can be drawn (Fig. 4, thick lines). To determine the concentration of compound G (wt%), a parallel to the edge EF is drawn from the given point H and crossed the edge EG at 60wt%, which is the concentration in G at the given point H. For the concentration of compound E (wt%), a parallel to the edge FG is drawn from the given point H and crossed the edge EF at 20wt%, which is the concentration in E at the given point H. Finally, for the concentration of compound F (wt%), a parallel to the edge EG is drawn from the given point H and crossed the side FG at 20wt%, which is the concentration in F at the given point H. Since the ratio R / S of the chiral compound is known, the same principle is applied to determine the concentration of the coformer (C) from the ternary phase diagram R-S-C extracted from the quaternary phase diagram R-S-C-Sv at a given concentration of the solvent. For example, Fig. 5 represents a zone A' of the quaternary phase diagram at a given concentration of the solvent. The ratio (R/S) between two enantiomers is 1 (represented by the dashed line), thus defining a racemic mixture. At such ratio and concentration of the solvent, a co-crystal (CR) (zone II) can be formed for any concentration of the coformer comprised between [C₀] and [C₁]. For example, in Fig. 5, the concentration of the coformer at A1 is around 50 mol%. The experiment can be performed using the selected parameters (ratio R/S between the first and second enantiomers or diastereomers, concentration of the solvent and of the coformer). The process of the present invention allows pure co-crystals (CR) of the desired first enantiomer or diastereomer with the coformer. The first enantiomer or diastereomer can be isolated by dissociating said first enantiomer or diastereomer from the coformer by methods well known to the persons skilled in the art

### Example

**Material and methods**

(2S)-2-(2-oxopyrrolidin-1-yl)butanamide (Levetiracetam) **(S-1)** was purchased from Xiamen Top Health Biochem. Tech. Co., Ltd. S-Mandelic acid **(S-2),** R-mandelic acid **(R-2),** D-tartaric acid **(S-3),** and L-tartaric acid **(R-3)** were purchased from Acros Organics. (RS)-2-(2-oxopyrrolidin-1-yl)butanamide **(RS-1)** was prepared from S-2-(2-oxopyrrolidin-1-yl)butanamide. 10g of S-2-(2-oxopyrrolidin-1-yl)butanamide together with catalytic amount (0.05 eq) of MeONa were added to 10 ml of MeOH. The solution was kept at reflux under continuous stirring for 24h, and then cooled to room temperature. The compound crystallizes spontaneously. After filtration, the compound was washed twice with MeOH. The recovered compound was used as such. X-ray diffraction (XRD) measurements were performed with a Siemens D5000 difractometer equipped with a Cu X-ray source operating at 40kV and 40 mA and a secondary monochromater allowing to select the Kα radiation of Cu (λ= 1.5418 Å). A scanning range of 2θ values from 2° to 72° at a scan rate of 0.6° min⁻¹ was applied. DSC measurements were performed on a DSC 821 Mettler Toledo. Prior to measurements, the DSC was calibrated using indium. Perforated aluminium crucibles were used for analysis. The heating rate was either 10 or 5°C min⁻¹ over a range from 25°C to 140°C (alternatively to 180 °C if melting did not yet occur). A reverse HPLC system Waters Alliance 2695 equipped with a PDA detector (Waters 2998) turned to 210 nm was used to monitor the Waters Atlantis T3 analytical column (50 mm x 4.6 mm x 3.5 μm). The injection volume was 10 μl and column temperature was keep at 35°C. A **chiral** HPLC system Waters 600 equipped with a PDA detector (Waters 996) set to 205 nm for detection. A Daicel Chiralpak IA analytical column (250 mm x 4.6 mm x 5 μm) has been used. An isocratic flow rate of 1 ml/min (80% Isohexane, 20% Ethanol) was used for elution. The injection volume was 25 μl and column temperature was keep at 20°C. In both systems, the columns are equilibrated in the initial conditions (for 10 min for reverse HPLC and for 30 min for chiral HPLC). Screening Experiment: the screening procedure consists in preparing a set of vials with given compositions of one or both enantiomers and optically active coformer. A fixed molar percentage (89 mol%) of acetonitrile is added in each vial, which are then hermetically sealed. Vials are heated up to 60°C until complete dissolution. Vials were then stored at a given temperature and seeded with one or both enantiomers, optically active coformer, and co-crystal comprising the first enantiomer and the optically active coformer. After two weeks, the system is assumed to have reached equilibrium. Such screening experiment may be useful to confirm data extracted from ternary phase diagram.

**Example** 1

The present process was applied to the separation of 2-(2-oxopyrrolidin-1-yl)butanamide **(RS-1).** This compound is the racemic form of Levetiracetam which is used to treat epilepsy. Only the enantiomer **(S1)** is active. The actual process for the separation of the two enantiomers of 2-(2-oxopyrrolidin-1-yl)butanamide is either chiral chromatography of derivatization of the compound and then chiral separation using common procedure. The present process was successfully applied to separate both enantiomers by crystallization without any chemical modification of the compound.

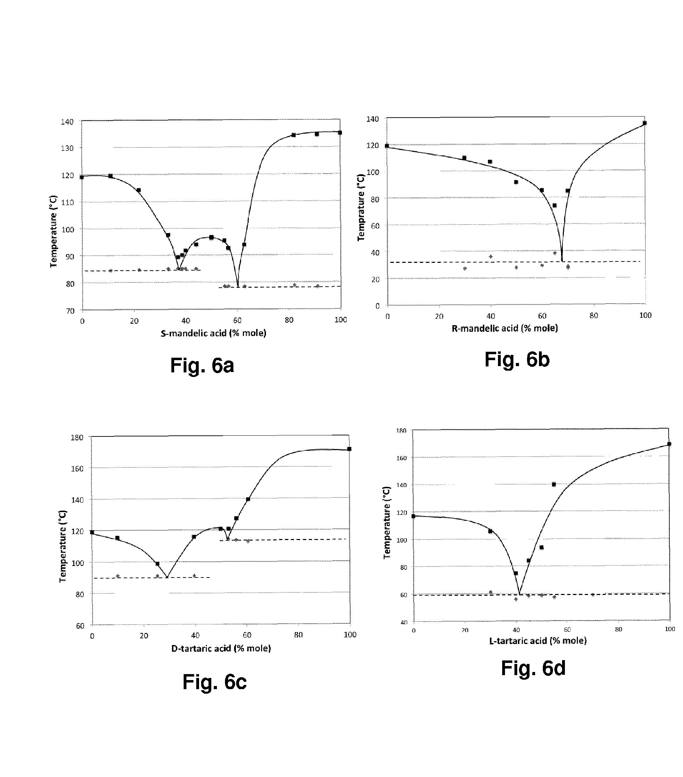

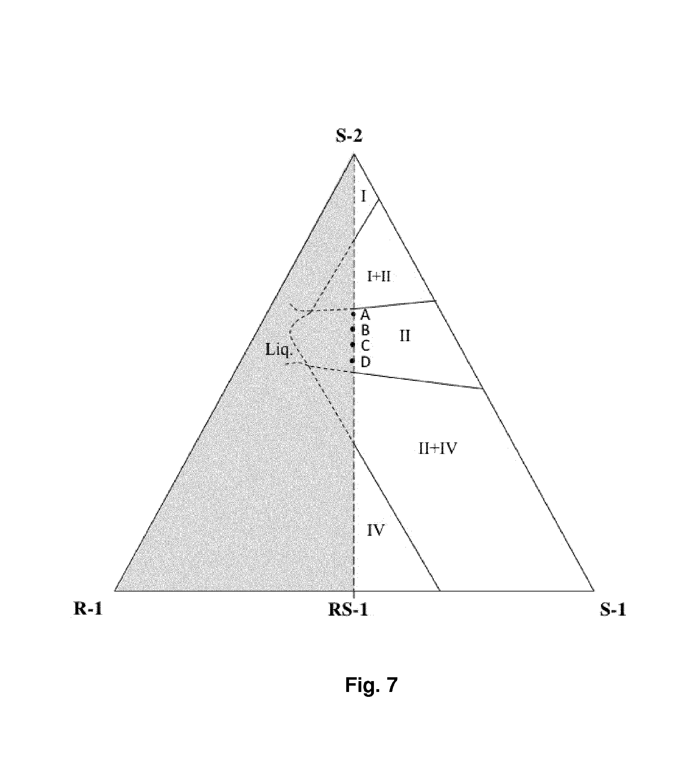

The process was applied with mandelic acid as coformer and acetonitrile as solvent. Only the S enantiomer of the coformer forms a eutectic composition with the levetiracetam (S1) as showed in Fig. 6a-b which represent binary melting phase diagram of levetiracetam (S1) with S-mandelic acid, R-mandelic acid respectively. Then co-crystals between levetiracetam (S1) and S-mandelic acid can be formed under defined conditions. A slice of the quaternary phase diagram is constructed between (2S)-2-(2-oxopyrrolidin-1-yl)butanamide, (2R)-2-(2-oxopyrrolidin-1-yl)butanamide and S-mandelic acid at -10°C and given concentration of acetonitrile. Indeed, at a concentration of 89 mol% in acetonitrile, a zone II exists wherein a co-crystal between (2S)-2-(2-oxopyrrolidin-1-yl)butanamide and S-mandelic acid is formed (see Fig. 7). In Fig. 7, zone I represents a zone where the coformer crystallizes. In Fig. 7, IV represents a zone where the racemic compound (RS) crystallizes. Then, in order to confirm that enantiospecific resolution can be obtained, four solutions having four different S-mandelic acid concentrations were prepared. Each solution contains 89 mol% of acetonitrile, a racemic mixture of 2-(2-oxopyrrolidin-1-yl)butanamide and S-mandelic acid. The four concentrations of coformer were selected from the ternary phase diagram at -10°C and at a concentration of 89 mol% in acetonitrile (Fig. 7, concentrations are noted A, B, C and D). For clarity reasons, only part of the ternary phase diagram was represented in Fig. 7. Each solution was left until co-crystallization occurs. Then, co-crystals were isolated and analyzed. Results are showed in table 1 below. The concentration A-D represented the molar percentage of the optically active coformer **(S-2)** based on the total molar percentage of the coformer and both enantiomers of 2-(2-oxopyrrolidin-1-yl)butanamide **(RS-1).** The molar percentage in the solution of each compound can be easily deduced since the concentration of the solvent (89 mol% of acetonitrile) is known.

**Table 1**

| Initial Concentration (S-2/(S-2+RS-1)) | | | Concentration in solution [acetonitrile] of 89 mol% | | Final Solid State (XRPD analysis) | % **S-1** Recovered in Solid Phase (Yield) |
|---|---|---|---|---|---|---|
| | **S-2 mol%** | **RS-1** mol% | **S-2** mol% | **RS-1** mol% | | |
| A. | 60.1 | 39.9 | 6.6 | 4.4 | II | 66.93 |
| B. | 58.5 | 41.5 | 6.4 | 4.6 | II | 66.11 |
| C. | 57.7 | 42.3 | 6.3 | 4.7 | II | 69.60 |
| D. | 54.3 | 45.7 | 5.9 | 5.1 | II | 68.99 |

For each concentration of the coformer selected (A to D), only co-crystals of between levetiracetam (i.e. (2S)-2-(2-oxopyrrolidin-1-yl)butanamide - S1) and S-mandelic acid was formed while the second enantiomer (2R)-2-(2-oxopyrrolidin-1-yl)butanamide was remained in solution. The overall yield of the process was comprised between 66 and 70%. The present process allows the separation of both enantiomer of 2-(2-oxopyrrolidin-1-yl)butanamide.

**Example 2**

The process was also performed with 2-(2-oxopyrrolidin-1-yl)butanamide and with tartaric acid as coformer. D-tartaric acid was used as optically active coformer since an eutectic composition is only formed between (2S)-2-(2-oxopyrrolidin-1-yl)butanamide and D-tartaric acid (Fig. 6c-d). A slice of the quaternary phase diagram between ethanol, both enantiomers of 2-(2-oxopyrrolidin-1-yl)butanamide and D-tartaric acid was made at a crystallization temperature of 3°C. Under these conditions, the concentrations of D-tartaric acid at which a co-crystal between (2S)-2-(2-oxopyrrolidin-1-yl)butanamide and D-tartaric acid was assessed. For example, a solution containing a racemic mixture of 2-(2-oxopyrrolidin-1-yl)butanamide, ethanol at a concentration of 89 mol% and D-tartaric acid at 6 mol%, was prepared. The solution was left at a temperature of 3°C and co-crystals between (2S)-2-(2-oxopyrrolidin-1-yl)butanamide and D-tartaric acid was obtained while the enantiomer (2R)-2-(2-oxopyrrolidin-1-yl)butanamide remains in solution. The co-crystal between (2S)-2-(2-oxopyrrolidin-1-yl)butanamide and D-tartaric acid was isolated and characterized by XRPD. Hence, the enantiomer (2S)-2-(2-oxopyrrolidin-1-yl)butanamide was successfully separated from the enantiomer (2R)-2-(2-oxopyrrolidin-1-yl)butanamide.

**Example 3**

The process was performed with a racemic mixture of (RS)-2-(4-(2-methylpropyl)phenyl)propanoic acid (i.e. racemic form of ibuprofen) and levetiracetam as optically active coformer. At a temperature of 3°C and from a solution containing acetonitrile at 89 mol%, and levetiracetam, at 5 or 6mol%, the (S) enantiomer (S)-2-(4-(2-methylpropyl)phenyl)propanoic acid can be resolved. All the conditions for performing the process were determined using the corresponding quaternary and/or ternary phase diagram as explained in the present application.

**Example 4**

L-proline forms a co-crystal with both enantiomers of (RS)-2-(6-methoxynaphthalen-2-yl)propanoic acid (i.e. naproxen) hereby obtaining a diasteriomeric pair of cocrystals as confirmed by XRPD. Using the corresponding quaternary and/or ternary phase diagram as explained in the present application, both enantiomers can be separated.

## Claims

1. A process for the separation of stereoisomers of a chiral compound, said process comprising the steps of:
(a) Forming a solution comprising :
● A first selection (p) of one or more of the stereoisomers (pi)
● A second selection (σ) of one or more of the stereoisomers (σi) at a given ratio (ρ/σ) between the first (p) and second (σ) selections of one or more stereoisomers
● an optically active coformer (C), and
● a solvent (sv),
wherein at a given crystallization temperature, Tc, the ternary phase diagrams between each of the stereoisomer (pi) of the first selection (p), the optically active coformer (C) and the solvent (sv) comprise at least two eutectic points defining a zone of co-crystallization (Cpi) between each stereoisomer (pi) of the first selection (p) and the optically active coformer (C),
(b) bringing and maintaining the solution to said crystallization temperature such as to form co-crystals (Cpi) of the coformer with each stereoisomer (pi) of the first selection (p), without forming any salt,
(c) separating the co-crystals from the rest of the solution;
**characterized in that,**
for said content ratio (ρ/σ) between the first selection (p) and the second selection (σ), the concentrations of the coformer and of the solvent are selected such that at least part of each of the stereoisomers (pi) of the first selection (p) co-crystallizes with the coformer and such that 100% of each of the stereoisomers (σi) of the second selection (σ) remains in solution over step (b) of the process.

2. A process according to claim 1 for the separation of enantiomers or diastereomers of a chiral compound from a mixture of two such enantiomers or diastereomers, said process comprising the steps of:
(a) Forming a solution comprising:
● a first enantiomer or diastereomer (R) of said chiral compound
● a second enantiomer or diastereomer (S) of said chiral compound, at a given content ratio (R/S) between the first and second enantiomers or diastereomers,
● an optically active coformer (C), and
● a solvent (sv),
wherein at a given crystallization temperature, Tc, the ternary phase diagram between the first enantiomer or diastereomer (R), the optically active coformer (C) and the solvent (Sv) comprises at least two eutectic points defining a zone of co-crystallization (CR) between the first enantiomer or diastereomer and the optically active coformer,
(b) bringing and maintaining the solution to said crystallization temperature such as to form co-crystals (CR) of the coformer with the first enantiomer or diastereomer, without forming any salt,
(c) separating the co-crystals from the rest of the solution;
**characterized in that,**
for said content ratio (R/S) between the first and second enantiomers or diastereomers, the concentrations of the coformer and of the solvent are selected such that at least part of the first enantiomer co-crystallizes with the coformer and such that 100% of the second enantiomer or diastereomer (S) remains in solution over step (b) of the process.

3. A process according to claim 1 or 2, wherein the chiral compound has general formula R-C(X)-NR¹R² (I) wherein R¹ and R² are the same or different and are independently selected from the group consisting of hydrogen, C₁-C₅₀ alkyl, C₂-C₅₀ alkenyl, C₂-C₅₀ alkynyl, C₃-C₅₀ cycloalkyl, C₆-C₁₈ aryl or heterocycle; X is oxygen or sulfur; and R is C₁-C₅₀ alkyl, C₂-C₅₀ alkenyl, C₂-C₅₀ alkynyl, C₃-C₅₀ cycloalkyl, C₆-C₁₈ aryl or heterocycle; or R, R¹ and/or R² are taken together with the -C(X)-N- moiety to which they are attached to form a four to twenty-membered heterocycle.

4. A process according to claim 3 **characterized in that** the chiral compound is a chiral pyrrolidinone of general formula (II) 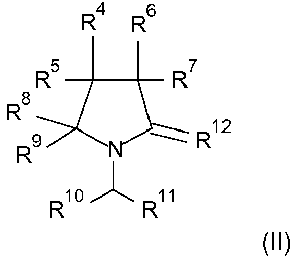 wherein
R¹¹ is selected from the group consisting of halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative;
R¹⁰ is selected from the group consisting of hydrogen, halogen, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, an oxy derivative, thio derivative, acyl derivative, thioketone, sulfonyl derivative or sulfinyl derivative;
R¹² is independently oxygen, sulfur;
R⁴, R⁵, R⁶, R⁷, R⁸ and R⁹ are the same or different and each is independently hydrogen, halogen, hydroxyl, nitro, cyano, thiocyanate, cyanamide, amido, thioamido sulfonamide, C₁-C₅₀ alkyl, C₂-C₅₀ alkenyl, C₂-C₅₀ alkynyl, C₃-C₅₀ cycloalkyl, ester, thioester, dithioester, ether, thioether, C₆-C₁₈ aryl, heterocycle, peroxide, oxy derivative, thio derivative, acyl derivative, thioketone, sulfonyl derivative or sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, hydroxamic acid.

5. A process according to claims 3 or 4 wherein the chiral compound is of general formula (III) 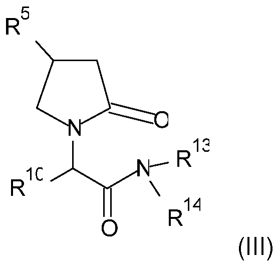 wherein
R¹³ and R¹⁴ are hydrogen; R¹⁰ is a C₁-C₅₀ alkyl group, C₂-C₅₀ alkenyl, C₂-C₅₀ alkynyl, C₃-C₅₀ cycloalkyl, C₆-C₁₈ aryl or hydrogen, preferably C₁-C₅₀ alkyl group or hydrogen;
R⁵ is selected from the group consisting of hydrogen, C₁-C₅₀ alkyl, C₂-C₅₀ alkenyl group, C₂-C₅₀ alkynyl, C₃-C₅₀ cycloalkyl, hydroxyl, C₆-C₁₈ aryl; with the proviso that when R⁵ is hydrogen, R¹⁰ is not hydrogen.

6. A process according to claim 1 or 2, **characterized in that**, said chiral compound is an hydrocarbon bearing one or more functional groups, each functional groups being selected from the group consisting of halogen, nitro, cyano, thiocyanate, cyanamide, amido, thioamido, sulfonamide, ester, thioester, dithioester, ether, thioether, peroxide, an oxy derivative, thio derivative, acyl derivative, thioketone, sulfonyl derivative or sulfinyl derivative.

7. A process according to claim 1 or 2, **characterized in that**, said chiral compound is of general formula (R¹⁵)(R¹⁶)(R¹⁷)C-CO₂H (VII) wherein R¹⁵, R¹⁶ and R¹⁷ are different and independently selected from the group consisting of hydrogen, substituted or not C₁-C₅₀ alkyl group, substituted or not C₂-C₅₀ alkenyl, substituted or not C₂-C₅₀ alkynyl, substituted or not C₃-C₅₀ cycloalkyl, substituted or not C₆-C₁₈ aryl and substituted or not heterocycle, halogen, hydroxyl, nitro, cyano, thiocyanate, cyanamide, amido, thioamido sulfonamide, ester, thioester, dithioester, ether, thioether, peroxide, oxy derivative, thio derivative, acyl derivative, thioketone, sulfonyl derivative or sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, hydroxamic acid.

8. A process according to any of the previous claims **characterized in that** the ratio (R/S) between the first and second enantiomers or diastereomers or the ratio (ρ/σ) between the first selection (p) and the second selection (σ), is comprised between 30/70 and 70/30, preferably between 40/60 and 60/40, more preferably it is substantially equal to 50/50.

9. A process according to any of the previous claims wherein the crystallization temperature ranges from -40°C to boiling temperature of the solvent, preferably from -20°C to 40°C.

10. A process according to any of previous claims **characterized in that** the solvent is water or one or more organic solvents, or mixture thereof.

11. A process according to any of previous claims wherein the optically active coformer has at least one functional group selected from the group consisting of halogen, nitro, cyano, thiocyanate, cyanamide, amido, thioamido, sulfonamide, ester, thioester, dithioester, ether, thioether, oxy derivative, thio derivative, acyl derivative, thioketone, sulfonyl derivative, sulfinyl derivative, thiol, nitrate, phosphate ester, thiophosphate ester, sulfate ester, carboxylic acid, phosphonic acid, phosphinic acid, sulfonic acid, amino, ammonium, imine, oxime, diazo, peroxide, hydroxamic acid, hydroxyl.

12. A process according to any of the previous claim 1 or 2 wherein the chiral compound is the chiral compound of claims 3, 4, 5 or 6, and the coformer is an optically active form of tartaric acid, ibuprofen or mandelic acid, and preferably the solvent is acetonitrile or ethanol.

13. A process according to any of the previous claim 1 or 2 wherein the chiral compound is the chiral compound of claim 7, and the coformer is levetiracetam or L-proline.

14. A process according to claim 1 **characterized in that** it further comprises the step (d) of dissociating the co-crystals obtained in step (c) and isolating a solution comprising stereoisomers (pi) issued from said first selection (p) having co-crystallized with the coformer.

15. A process according to claim 14 **characterized in that** said process of claim 13 is repeated with stereoisomers obtained in step (d) until only one optically active form of the chiral compound co-crystallized with a optically active coformer.
